# EUROPÄISCHE PATENTSCHRIFT

(11) **EP 3 253 637 B1**
(45) Veröffentlichungstag und Bekanntmachung des Hinweises auf die Patenterteilung: **02.09.2020**
(21) Anmeldenummer: 16703767.0
(22) Anmeldetag: 08.02.2016
(51) Int. Cl.: B61D 3/18

(54) **TRANSPORTVORRICHTUNG FÜR SCHIENENFAHRZEUGE**
TRANSPORTATION DEVICE FOR RAIL VEHICLES
DISPOSITIF DE TRANSPORT POUR VÉHICULES FERROVIAIRES

(30) Priorität: 06.02.2015 AT 500972015; 13.03.2015 DE 102015003143
(43) Veröffentlichungstag der Anmeldung: 13.12.2017
(73) Patentinhaber: Railadventure GmbH, 80636 München (DE)
(72) Erfinder: SCHURIG, Jörg, 80636 München (DE); GABRIEL, Helmut, 3100 St. Pölten (AT); MEYER, Georg, 90402 Nürnberg (DE)
(74) Vertreter: MERH-IP Matias Erny Reichl Hoffmann Patentanwälte PartG mbB
(86) Internationale Anmeldenummer: PCT/EP2016/052650
(87) Internationale Veröffentlichungsnummer: WO 2016/124791

(56) Entgegenhaltungen:
- BE-A- 362 371
- CH-A- 16 928
- US-A- 1 280 142
- US-A- 2 058 955

## Beschreibung

Die vorliegende Erfindung betrifft eine Transportvorrichtung bzw. ein Transportfahrzeug für Schienenfahrzeuge. Insbesondere umfasst die vorliegende Erfindung ein Eisenbahntransportfahrzeug mit bevorzugt zwei Radachsen, das dazu ausgebildet sein kann, zumindest einen Radsatz eines zu transportierenden Schienenfahrzeuges aufzunehmen, um das Schienenfahrzeug auf Eisenbahnschienen transportieren zu können. Die hier beschriebene Transportvorrichtung kann die gleiche oder eine abweichende Spurweite aufweisen wie/als die zu transportierenden Schienenfahrzeuge. Besonders bevorzugt kann für jede Radachse des Schienenfahrzeuges eine Transportvorrichtung verwendet werden.

Es ist ein besonders hervorzuhebender technischer Vorteil der hier beschriebenen Erfindung, dass die erfindungsgemäße Transportvorrichtung über eine besonders gute Kurvengängigkeit verfügt und eine besonders hohe Sicherheit vor Entgleisen bietet. Insbesondere ist die Transportvorrichtung technisch dazu eingerichtet, ein sicheres Durchfahren von Kurvenradien oder dgl. zu ermöglichen, so dass die Transportvorrichtung auch im beladenen Zustand mit Reisegeschwindigkeiten von bspw. bis zu 60 bis 100 km/h über große Distanzen bewegt werden kann.

Es ist ein weiterer hervorzuhebender technischer Vorteil der hier beschriebenen Erfindung, dass die Transportvorrichtung auf unterschiedliche Spurweiten von Schienenfahrzeugen einstellbar ist. Beispielsweise können die hier beschriebenen Transportvorrichtungen dazu geeignet sein, Schienenfahrzeuge für Breitspurweiten auf Eisenbahngleisen von Ländern zu transportieren, die Normalspurweite verwenden.

Im Stand der Technik sind Transportvorrichtungen bekannt, die havarierte Schienenfahrzeuge transportieren können. Diese können jedoch nur mit geringen Geschwindigkeiten von z.B. 10 km/h bewegt werden, da andernfalls ein Entgleisen nicht sicher vermieden werden kann. Der technische Hintergrund wird nachfolgend erläutert: Angenommen es soll ein Schienenfahrzeug bzw. eine Lok mit zwei Drehgestellen, die jeweils zwei Radsätze aufweisen, transportiert werden. In diesem Fall kann jedem Radsatz der Lok eine Transportvorrichtung zugeordnet werden, d.h. auf jeder Transportvorrichtung wird ein Radsatz gelagert. Bekannte Transportvorrichtungen, wie z.B. von der US 3 638 582 beschrieben werden, weisen zwei Radsätze auf, zwischen denen eine Lagerplatte zum Aufstellen der Räder des Radsatzes der Lok angeordnet ist. Der im Hinblick auf das Durchfahren von Kurven oder Gleisradien relevante Achsabstand vergrößert sich aufgrund der oben beschriebenen Anordnung deutlich, da der relevante Achsabstand nun zwischen den äußersten Achsen einer ersten und einer zweiten Transportvorrichtung, die zusammen die beiden Achsen eines Drehgestelles der transportierten Lok lagern, zu messen ist (anstatt zwischen den Achsen der Radsätze des Drehgestelles). Dieser vergrößerte Achsabstand und die Fesselung der Radsätze des Drehgestells auf der Lagerplatte führt zu einer ungünstigen Vergrößerung des Anlaufwinkels, was die Kurvengängigkeit des Transportverbundes, der z.B. vier Transportvorrichtungen umfasst, reduziert und die Gefahr von Entgleisungen insbesondere bei der Kurvenfahrt erhöhen kann. Ferner beschreibt die US 2 058 955 A eine Vorrichtung zum Transport von Schienenfahrzeugen auf Straßen. Die Vorrichtung weist ein Gleiselement für jedes der Räder des Schienenfahrzeuges sowie Achsen auf, die Straßenräder an beiden Seiten der Gleiselemente halten. Die US 1 280 142 A beschreibt ein Schienenfahrzeug zum Transport von Straßenfahrzeugen.

Die CH 577 403 und die US 2 919 659 A beschreiben Transportvorrichtungen zur Aufnahme eines Radsatzes eines Schienenfahrzeuges für den Transport von Schienenfahrzeugen auf Eisenbahnschienen.

Es ist eine Aufgabe der vorliegenden Erfindung eine Transportvorrichtung für den Transport von Schienenfahrzeugen auf Eisenbahnschienen bereitzustellen, die derart eingerichtet ist, dass die Transportvorrichtung auch im beladenen Zustand eine hohe Kurvengängigkeit gewährleistet und Entgleisungen sicher vermieden werden können, so dass zu transportierende Schienenfahrzeuge bei relativ hohen Reisegeschwindigkeiten über große Wegstrecken transportiert werden können.

Die Aufgabe wird von der Erfindung gemäß dem Patentanspruch 1 gelöst. Weitere bevorzugte Weiterentwicklungen der Erfindung werden von den abhängigen Patentansprüchen beschrieben.

Die erfindungsgemäße Transportvorrichtung kann insbesondere für den Transport von Schienenfahrzeugen auf Eisenbahnschienen bzw. insbesondere zur Aufnahme eines Radsatzes eines Schienenfahrzeuges für den Transport des Schienenfahrzeuges auf Eisenbahnschienen ausgebildet sein.

Die Transportvorrichtung kann ein Rahmen(-element) aufweisen, das zumindest zwei Längsträgerelemente umfassen kann, die in Querrichtung zueinander beabstandet angeordnet sein können. Mit anderen Worten können die Längsträgerelemente so angeordnet sein, dass diese parallel zueinander und parallel zu Eisenbahngleisen, auf denen die Transportvorrichtung aufstellbar sein kann, angeordnet sind. Der Querabstand zwischen den beiden Längsträgerelementen ist bevorzugt derart gewählt, dass Räder des Radsatzes der Transportvorrichtung zwischen den Längsträgerelementen anordenbar sind und diese Räder die Spurweite aufweisen, die das Land, in dem die Transportvorrichtung zum Einsatz kommen soll, aufweist. Die Räder des Radsatzes können in einer alternativen Ausgestaltung auch außerhalb der Längsträgerelemente anordenbar sein, wobei der Querabstand zwischen den Längsträgerelementen dann entsprechend auf die vorgegebene Spurweite anzupassen ist.

Die Längsträgerelemente können bevorzugt massive Metallbleche sein, die eine Dicke von mehreren Zentimetern umfassen. Bevorzugt sind die Längsträgerelemente relativ länger als breit und hoch.

Ferner kann die Transportvorrichtung zumindest zwei Radsätze aufweisen. Ein Radsatz kann insbesondere eine (Rad-)Achse und zwei Räder aufweisen. Die Räder können einen Spurkranz aufweisen. Neben den Rädern und der Achse kann der Radsatz insbesondere auch ein Radsatzlager, das bevorzugt in einem Gehäuse angeordnet ist, aufweisen, so dass die Achse drehbar lagerbar sein kann.

Die bevorzugt zwei Radsätze (mehr Achsen bzw. Radsätze sind möglich) können an den Längsträgerelementen in Längsrichtung zueinander beabstandet angeordnet sein. Bevorzugt sind die Radsätze so an den Längsträgerelementen angeordnet, dass die beiden Achsen senkrecht zur Längsachse der Längsträgerelemente stehen. Ferner können die Radsätze bevorzugt an einem jeweiligen Endabschnitt (in Längsrichtung gesehen) der Längsträgerelemente angeordnet sein.

Die Längsträgerelemente können bevorzugt eine grobe Grundform eines Quaders mit im Vergleich zu den Längskanten kurzen Seitenkanten haben. Bevorzugt weist das Längsträgerelement die Grundform modifizierende Komponenten auf. Diese Komponenten können z.B. Aufnahmen für Radsätze, Verstärkungen, Verjüngungen etc. umfassen und einteilig mit dem Längsträgerelement verbunden sein oder bevorzugt mittels Schweißverbindung verbunden sein. Insbesondere kann eine Komponente folgende sein: Jeweils zwischen den zumindest zwei Radsätzen (bzw. deren Achsen bzw. den Aufnahmestellen für die Achsen des Längsträgerelementes) kann das Längsträgerelement eine Aussparung/Mulde zum Aufnehmen eines Rades eines zu transportierenden Schienenfahrzeuges aufweisen. Die Aussparung kann bevorzugt in einer nach oben ausgerichteten Seite bzw. der Oberseite des Längsträgerelementes vorgesehen sein.

Die Aussparung kann in der Längsschnittansicht bevorzugt eine gekrümmte Oberfläche bzw. eine gekrümmte obere Seitenkante aufweisen, wobei die Größe der Aussparung bzw. deren Krümmung bevorzugt so bemessen sein kann, dass der Radius eines Rades eines zu transportierenden Schienenfahrzeuges kleiner ist. Dadurch kann das aufzunehmende Rad mit einem Spiel entlang der X-Richtung von der Aussparung aufgenommen bzw. gelagert werden. Bevorzugt kann die obere Oberfläche der Aussparung dazu geeignet sein, das Rad des zu transportierenden Schienenfahrzeuges zumindest in einem Teilbereich des Außenumfanges zu kontaktieren bzw. aufzunehmen.

Hier ist zudem beachtlich, dass in einer bevorzugten Ausgestaltung der Transportvorrichtung eine erste Aussparung des ersten Längsträgerelementes und eine zweite Aussparung des zweiten Längsträgerelementes vorgesehen sein können, wobei die beiden Aussparungen unterschiedlich ausgebildet sein können.

Die Räder des Schienenfahrzeuges können bevorzugt derart aufgestellt werden, dass ein Spurkranz des jeweiligen Rads mit einer inneren Seitenkante der Aussparung in Kontakt sein kann oder ein (geringfügiger, d.h. wenige Zentimeter oder Millimeter) vorbestimmter Abstand zwischen einer Außenseite des Spurkranzes und der inneren Seitenkante vorliegen kann.

Es entspricht somit, kurz zusammengefasst, einem besonders bevorzugten Ausgestaltungsbeispiel, wenn zumindest eine Aussparung eines Längsträgerelementes einen Radius oder eine Form aufweist, die um ein vorbestimmtes Maß größer ist als der Radius/Durchmesser des aufzunehmenden Rades.

Zusammenzufassen ist, dass die erfindungsgemäße Transportvorrichtung u.a. aufgrund der Längsträgerelemente mit an die Abmessungen von Rädern zu transportierender Schienenfahrzeuge angepassten Aussparungen zur Aufnahme eines Rades eine bessere Kurvengängigkeit und Entgleisungssicherheit aufweist. Die Räder oder zumindest ein Rad einer Seite eines Radsatzes des Schienenfahrzeuges können/kann besonders bevorzugt mit Spiel bzw. Bewegungsfreiraum in X-Richtung in der Aussparung angeordnet sein, so dass bei einer Kurvendurchfahrt der Transportvorrichtung eine selbstständige Anpassung der Lagerung bzw. Lagerposition des Rades in der Aussparung erfolgen kann. Im einfachsten Fall kann das Spiel dadurch eingestellt sein, dass zumindest eine Aussparung eine kreisbogenform aufweist, deren Radius größer ist als der Radius des Rades des Schienefahrzeuges.

Allgemein soll an dieser Stelle ferner festgehalten werden, dass in dieser Beschreibung nachfolgend mit dem Begriff Längsrichtung generell die Richtung gekennzeichnet sein soll, die in Fahrtrichtung entlang der Gleise/Eisenbahnschienen (auf denen die Transportvorrichtung aufstellbar ist) zeigt, die üblicherweise auch als X-Richtung bezeichnet wird. Die Y-Richtung wird nachfolgend als Querrichtung bezeichnet und ist bevorzugt die Richtung, die senkrecht zur X-Richtung in der gleichen Ebene angeordnet ist, d.h. die Richtung quer zu den Eisenbahnschienen. Die Z-Richtung markiert die vertikale Richtung und zeigt mit der positiven Achse nach "oben". Weiterhin werden auch die Begriffe "unten" und "oben" verwendet. "Unten" soll insbesondere "in Richtung der Gleise zeigend", "relativ näher zu den Gleisen" oder "relativ weiter in Richtung kleinerer Z-Werte angeordnet" bedeuten. "Oben" soll insbesondere das Gegenteil von "unten" umfassen.

Ferner kann eine erste Aussparung eines ersten Längsträgerelementes derart gestaltet sein, dass die Aussparung bzw. ein Längsschnitt durch deren obere Oberfläche zwei Radien aufweisen kann. Zwischen den beiden Radien (in Längsrichtung) kann ein horizontaler/gerade (Verbindungs-)Abschnitt angeordnet sein. Bevorzugt können die beiden Radien an einen maximalen Durchmesser eines Rades eines zu transportierenden Schienenfahrzeuges angepasst sein. Der gerade oder auch flache Abschnitt vergrößert die Aussparung bzw. deren Schnittfläche jedoch derart, dass das aufzunehmende Rad des Schienenfahrzeuges einen Bewegungsspielraum in X-Richtung hat, der mit der Länge des geraden Abschnittes in X-Richtung korreliert.

Die oben beschriebene bevorzugte Form der ersten Aussparung bzw. deren Längsschnittes im Bereich der oberen Oberfläche erlaubt es somit vorteilhaft, dass das in der ersten Aussparung aufgenommen Rad eine Längsrichtungspositionsanpassung selbsttätig vornehmen kann, wenn die Transportvorrichtung bspw. eine Kurve durchfährt. Dies ist besonders von Bedeutung, wenn ein Drehgestell eines Schienenfahrzeuges von zwei hintereinander angeordneten Transportvorrichtungen gelagert wird, da der Achsabstand, der für die Kurvengängigkeit dieses Verbundes relevant ist, deutlich gegenüber dem Achsabstand der beiden gelagerten Radachsen des Drehgestells des Schienenfahrzeuges vergrößert ist. Eine positionsfixe Fesselung der Räder auf der Transportvorrichtung bzw. den Transportvorrichtungen kann somit vermieden und die Kurvengängigkeit verbessert werden, was u.a. auch die Gefahr einer Entgleisung ausschließt.

Ferner kann eine zweite Aussparung eines zweiten Längsträgerelementes einen gekrümmten Abschnitt aufweisen. Bevorzugt kann die zweite Aussparung größer als der maximale Durchmesser des aufzunehmenden Rades sein. Die zweite Aussparung kann der ersten Aussparung in Querrichtung gegenüberliegend angeordnet sein und gemäß einem Beispiel die Form eines Halbkreises aufweisen. Besonders bevorzugt setzt sich die Form der zweiten Aussparung aus verschiedenen Radien oder Kurvenabschnitten zusammen. Ganz besonders bevorzugt kann ein in Längsrichtung mittlerer Abschnitt einen Radius aufweisen, der einem maximalen Radius eines Rades entsprechen kann und seitlich zu dem Radius können sich schräg nach oben angeordnete Geraden anschließen. Die zweite Aussparung ermöglicht aufgrund der oben genannten Ausgestaltungen u.a. einen sicheren Sitz des Rads bzw. eines Teils dessen Außenumfangs, so dass das Rad sicher gelagert werden kann.

Ferner sind an dem zweiten Längsträgerelement innerhalb der Aussparung zwei Radaufnahmeelemente, bevorzugt Rollen, an einer Innenseite des Längsträgerelementes rotierbar gelagert. Die Radaufnahmeelemente sind in Längsrichtung zueinander beabstandet gelagert und besonders bevorzugt können die Radaufnahmeelemente an einer Innenseite der zweiten Aussparung angeordnet sein. Die Radaufnahmeelemente können senkrecht zur Längsachse des Längsträgerelementes ausgerichtet sein. Ganz besonders bevorzugt sind zwei Radaufnahmeelemente vorgesehen, die jeweils mit einem gleichen Abstand zu einem Mittelpunkt der zweiten Aussparung in Längsrichtung positioniert sein können. Der Abstand zwischen den Radaufnahmeelementen ist bevorzugt derart gewählt, dass die Radaufnahmeelemente ein in der Aussparung aufgenommenes Rad des zu transportierenden Schienenfahrzeuges jeweils an einem Punkt dessen Umfangs kontaktieren. Bevorzugt können diese Kontaktpunkte in einem unteren Abschnitt des Radkreises liegen, so dass bevorzugt nur ein relativ kleines Kreisbogensegment des Rades zwischen den Radaufnahmeelementen vorliegt, wobei der Abstand zwischen den Radaufnahmeelementen bevorzugt so groß ist, dass das Rad unter Einsatzbedingungen nicht von den Rollen abgleiten kann.

Die zweite Aussparung und die Anordnung von Radaufnahmeelementen innerhalb der zweiten Aussparung des zweiten Längsträgerelementes wirkt sich besonders vorteilhaft in Kombination mit der oben bereits dargelegten ersten Aussparung des ersten Längsträgerelementes aus, da die erste Aussparung das beschriebene Längsbewegungsspiel ermöglicht, während die zweite Aussparung mit den Radaufnahmeelementen eine Entkoppelung (in Drehrichtung) der Schienenfahrzeugachse von der Transportvorrichtung ermöglicht. Mit anderen Worten kann auf einer Seite eines aufgenommenen/gelagerten Radsatzes des Schienenfahrzeuges eine Entkoppelung der Achse des Schienenfahrzeugrades von der Transportvorrichtung erreicht werden, während die andere Seite ein Spiel in Längsrichtung aufweisen kann, um ein Einstellen von Transportvorrichtungen insbesondere im Verbund mehrerer hintereinander fahrender Transportvorrichtungen bei einer Kurvendurchfahrt zu ermöglichen. Die erste Aussparung kann dazu mit zumindest einem derart größeren Radius als das aufzunehmende Rad ausgestattet sein, dass das X-Längsspiel gegeben ist.

Ferner kann eine Breite der ersten Aussparung bzw. deren oberer Oberfläche mittels einer an der Innenseite der ersten Aussparung montierbaren Sichel veränderbar/einstellbar sein. Die Sichel kann besonders bevorzugt eine identische obere Oberflächenform in der Längsschnittrichtung aufweisen, so dass die Form der ersten Aussparung nur hinsichtlich ihrer Breite verändert wird. Die Sichel kann weggelassen werden, wenn Schienenfahrzeuge mit besonders großer Spurweite zu transportieren sind (insbesondere kann die Sichel dann weggelassen werden/demontiert werden, wenn die maximale Spurweite, auf die die Transportvorrichtung ausgelegt ist, transportiert werden soll). Sollen Schienenfahrzeuge mit geringerer Spurweite (als die maximale Auslegungsspurweite) transportiert werden, so kann eine Sichel vorbestimmter Breite an der Innenseite der zweiten Aussparung montiert werden (bspw. mittels Schraubverbindungen). Die vorbestimmte Breite der Sichel ist bevorzugt so gewählt, dass diese der halben Spurdifferenz zwischen der maximalen Auslegungsspurtweite der Transportvorrichtung und der Spurweite der zu transportierenden Lok/Schienenfahrzeug entspricht.

Die Transportvorrichtung kann so gestaltet sein, dass die maximale Spurweite, die transportierbar ist, eine 1676mm-Spurweite ist, wie bspw. sie u.a. in Indien Verwendung findet und mittels der Sichel und weiteren Adaptionsmöglichkeiten, wie der Querpositionseinstellung von Rollenaufnahmeelementen die Spurweite soweit reduziert werden kann, dass auch noch z.B. Schienenfahrzeuge mit 760mm oder 600mm Schmalspurweite transportierbar sein können. Besonders bevorzugt kann die Transportvorrichtung zumindest die in Europa, Asien und Russland sehr verbreitet genutzten Spurweiten von 1436mm, 1520mm, 1524mm und 1688mm transportierten bzw. darauf einstellbar sein. Die verschiedenen Spurweiten können über eine oder mehrere Sicheln unterschiedlicher Breite und/oder Hülsen unterschiedlicher Breite anpassbar sein.

Die Möglichkeit, die Form der Aussparung insbesondere bezüglich deren Breite anzupassen, bringt den technischen Vorteil mit sich, dass eine Flexibilität hinsichtlich des Transports von Schienenfahrzeugen mit unterschiedlichen Spurweiten gegeben ist. So können auch Schienenfahrzeuge mit einer Spurweite transportiert werden, die von der Spurweite der Transportvorrichtung abweicht.

Ferner kann der Rahmen zumindest ein Querträgerelement aufweisen, das bevorzugt senkrecht zu und zwischen den Längsträgerelementen montiert sein kann. Es ist auch bspw. möglich das Querträgerelement mit einem Winkel zwischen den Längsträgerelementen anzuordnen oder zwei sich kreuzende Querträgerelemente vorzusehen. Besonders bevorzugt kann der Rahmen in einer Draufsicht (ohne die montierten Radsätze) bevorzugt eine H-Form haben, so dass eine optimale Steifigkeit der Transportvorrichtung insbesondere gegenüber Verwindungen gewährleistet werden kann. Bevorzugt werden die Radsätze und der Rahmen nur aufgrund der Gewichtskraft des Rahmens und der Form der Ausnehmung miteinander verbunden und festgehalten.

Die Längsträgerelemente können jeweils an Längsendabschnitten eine bevorzugt U-förmige Ausnehmung aufweisen, die nach unten offen sein kann und dazu geeignet sein kann, eine Achse eines Radsatzes der Transportvorrichtung aufzunehmen. Die Ausnehmung kann auch eine andere als die U-Form aufweisen. Die nach unten geöffnete Form erlaubt es insbesondere, dass eine Achse eines Radsatzes möglichst sicher und reibungsminimiert gelagert werden kann.

Bevorzugt können die Räder der Radsätze der Transportvorrichtung jeweils auf der Innenseite der Längsträgerelemente angeordnet sein, so dass eine sehr kompakte Transportvorrichtung angeboten werden kann, die auch optimale Sicherheit bietet, da rotierende Elemente, insbesondere die Räder, innerhalb der Längsträgerelemente positioniert sind.

Jeweils an einer Außenseite der Längsträgerelemente, bevorzugt um die U-förmige Ausnehmung herum angeordnet, können ein horizontaler Kragen und zwei vertikale Schienen abstehen (von der Außenseite), die entlang der Form eines nach unten geöffneten Rechteckes angeordnet sein können. Der Kragen und die Schienen können dazu vorgesehen sein, innerhalb des von ihnen begrenzten Volumens ein Lagergehäuse eines Radsatzes (Radsatzlagergehäuse) aufzunehmen. Andere Ausgestaltungen zum Lagern des Radsatzlagergehäuses sind denkbar. Die Montage der Radsätze kann somit besonders sicher und mit wenig Montageaufwand durchgeführt werden, da die Radsatzlagergehäuse beispielsweise relativ wenig komplex zwischen den vertikalen Schienen eingeschoben werden können bzw. der Rahmen kann von oben auf die Radsätze bzw. die Radsatzlagergehäuse aufgeschoben/abgesetzt werden.

Zwischen dem (bevorzugt horizontalen) Kragen und dem Radsatzlagergehäuse kann ein Federelement angeordnet sein, dass in Z-Richtung, X-Richtung und/oder Y-Richtung ein Lagerspiel bzw. einen Federweg aufweisen/bieten kann, so dass Schwingungen und Stöße gedämpft werden können bzw. der Rahmen von Vertikalbewegungen der Radsätze teilweise/elastisch entkoppelt werden kann.

Das Radlagergehäuse kann zwei Längsenden (bevorzugt die in Längsrichtung zeigenden kürzeren Kanten) mit jeweils einer Vorstehung aufweisen. Die Vorstehung kann in einen Führungsabschnitt der vertikalen Schienen eingesetzt werden bzw. dort eingreifen, so dass das Einschieben und Sichern des Radsatzlagergehäuses besonders wenig komplex durchgeführt werden kann. Besonders bevorzugt können zwischen der Vorstehung und einer oder mehreren Außenwänden des Führungsabschnittes ein oder mehrere (Luft-)Spalt(e) vorgesehen sein. Dieser Spalt oder die Spalte ermöglichen in der entsprechenden Richtung eine weitere Längs- und/oder Queranpassung der Transportvorrichtung, bspw. während der Kurvenfahrt, so dass die Kurvengängigkeit noch weiter verbessert werden kann.

Das Radaufnahmeelement oder die Radaufnahmeelemente kann/können (jeweils) auf einer Drehachse gelagert sein, die zwischen zwei zueinander beabstandeten Längsabschnitten des Längsträgerelementes, bevorzugt in einer Versenkung, angeordnet sein kann. Das Radaufnahmeelement kann gegen ein Verschieben in Querrichtung von zumindest einer Hülse fixiert werden. Ferner kann auch eine Wandfläche eines Längsabschnittes des Längsträgerelementes für die Fixierung herangezogen werden. Die Querrichtungsfixierung des Radaufnahmeelementes ist somit auf unterschiedliche Weise realisierbar, so können eine Hülse auf einer Seite und eine Seitenwand eines Längsabschnittes des Längsträgerelementes verwendet werden. Es können alternativ auch zwei Hülsen rechts und links des Radaufnahmeelementes angeordnet sein, die die Querpositionierung sichern. Die vorbeschriebene Anordnung in einer bevorzugten Versenkung erlaubt es, dass die Rollen möglichst gut gegen Beschädigung geschützt werden können und nur soweit aus der Versenkung herausstehen, dass die technische Funktion der Kontaktierung/Aufnahme des Rades des Schienenfahrzeuges gewahrt bleibt. Ferner ist die Anordnung zwischen zwei Längsabschnitten mechanisch vorteilhaft gegenüber einer einseitigen Fixierung der Drehachse.

Die Radaufnahmeelemente bzw. die Rollen können bevorzugt einen Durchmesser von 100 - 300mm aufweisen, wobei ein großer Durchmesser von bspw. 200 mm, 300 mm oder mehr den technischen Vorteil hat, dass die Druckbelastung der transportierten Räder an den Kontaktstellen reduziert wird, so dass eine Beschädigung des Transportgutes bzw. der Räder des Schienenfahrzeuges sicher vermieden werden kann.

Die Hülse(n) weisen die besonders bevorzugte Funktion auf, dass mittels der Wahl deren Länge, die Querpositionierung des Radaufnahmeelementes einstellbar ist. Wird beispielsweise eine Spurweitenanpassung auf das zu transportierende Schienenfahrzeug erforderlich, so kann auf einer Seite des Rahmens eine entsprechend breite Sichel montiert werden und auf der Seite des zweiten Längsträgerelementes kann eine Hülse (oder mehrere) entsprechender Breite eingesetzt werden. Die entsprechende Breite kann dabei bevorzugt die halbe Breite der Spurweitendifferenz sein.

Mit anderen Worten kann eine vorbestimmte Queranordnungsposition des Radaufnahmeelementes mittels der Länge der zumindest einen Hülse und deren Anordnung in Relation zu den Längsabschnitten des Längsträgerelementes einstellbar sein.

Ferner kann die Transportvorrichtung vier Kranösen aufweisen, die jeweils an einem Längsendabschnitt der Längsträgerelemente angeordnet sein können und ein Anheben und Bewegen insbesondere des Rahmens mittels eines Krans oder dgl. ermöglichen.

Ferner können auch elektrische Querverbindungen zwischen den äußeren Längsenden der Längsträgerelemente, z.B. in Form von metallischen Querstreben, angeordnet sein. Bevorzugt können die elektrischen Querverbindungen vorne und hinten in Längsrichtung der Längsträgerelemente elektrisch leitend mit den Längsträgerelementen verbunden sein, z.B. zwischen den Kranösen. Die Anordnung der elektrischen Querverbindungen erlaubt es, dass eine Induktionsschleifenauslösung z.B. bei Schrankenanlangen ermöglicht wird.

Ferner kann zumindest ein elastisches Stopperelement vorgesehen sein; bevorzugt kann an jeweils einem Längsende eines Längsträgerelementes ein solches angeordnet sein, so dass bei einem Aufeinanderprallen von zwei Transportvorrichtungen oder dgl. keine Schäden an der Transportvorrichtung entstehen. Das Stopperelement kann bevorzugt einen Elastomerkopf aufweisen, an dem ein Schraubenelement bzw. Gewinde befestigt ist, so dass das Stopperelement schraubend mit dem Rahmen verbindbar ist.

Zusammenfassend ermöglicht die Erfindung somit, dass die erfindungsgemäße Transportvorrichtung insbesondere im Hinblick auf ihre Kurvengängigkeit deutlich gegenüber vorbekannten Vorrichtungen verbessert ist.

Die Erfindung wird im Folgenden exemplarisch mit Bezug auf die beigefügten, schematischen Zeichnungen beschrieben. Es zeigen
- Fig. 1: ein zu transportierendes Schienenfahrzeug mit vier Transportvorrichtungen, die als Verbund vier Radsätze des Schienenfahrzeuges tragen,
- Fig. 2: eine isometrische Ansicht einer Transportvorrichtung,
- Figs. 3, 4: Seitenschnittansichten einer Transportvorrichtung,
- Figs. 5, 6: Schnittansichten von Teilabschnitten einer Transportvorrichtung und
- Figs. 7a-c: Ansichten insbesondere des Rahmens der Transportvorrichtung.

Im Folgenden werden verschiedene Beispiele der vorliegenden Erfindung detailliert unter Bezugnahme auf die Figuren beschrieben. Gleiche bzw. ähnliche Elemente in den Figuren werden hierbei mit gleichen Bezugszeichen bezeichnet. Die vorliegende Erfindung ist jedoch nicht auf die beschriebenen Beispiele begrenzt, sondern umfasst weiterhin Modifikationen von Merkmalen der beschriebenen Beispiele und Kombination von Merkmalen verschiedener Beispiele im Rahmen des Schutzumfangs der unabhängigen Ansprüche.

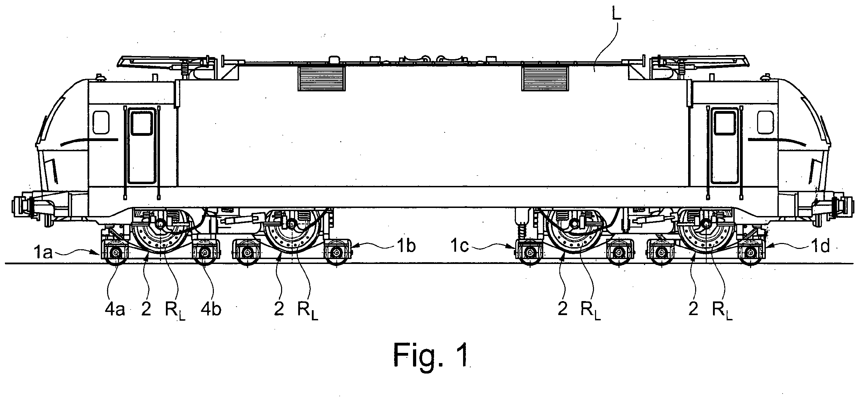

Die nachfolgende Beschreibung der Figuren und auch die Ansichten der Figuren beschränken sich im Wesentlichen auf eine Transportvorrichtung 1a, die beispielhaft herangezogen werden soll. Die in Figur 1 gezeigten weiteren Transportvorrichtungen 1b-d sind bevorzugt identisch ausgestaltet bzw. aufgebaut.

Figur 1 zeigt ein zu transportierendes Schienenfahrzeug/Lok L, die vier Radsätze mit jeweils zwei Rädern RL aufweist wobei zwei Radsätze des Schienenfahrzeuges L an einem Drehgestell miteinander gekoppelt sind.

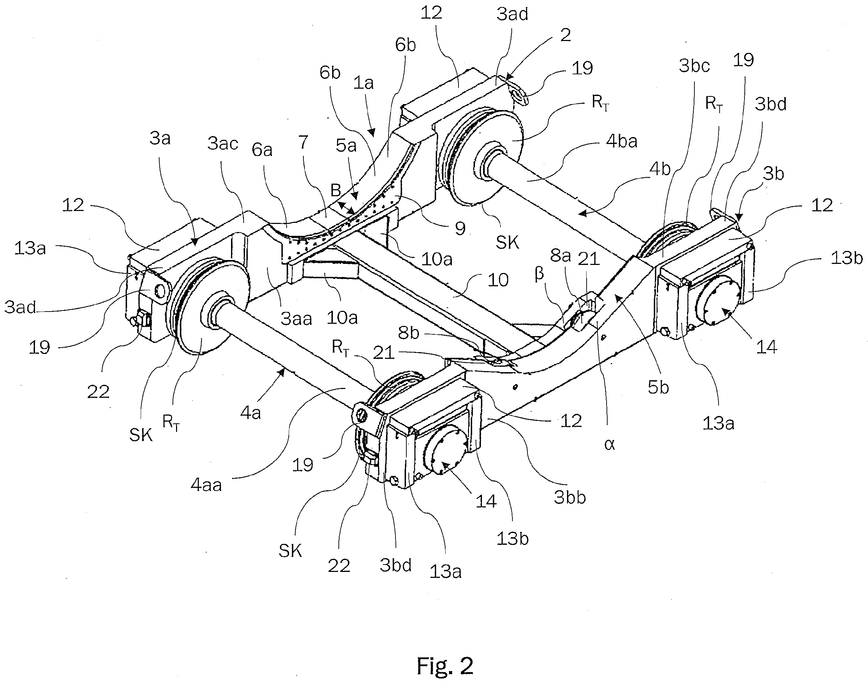

Figur 1 zeigt eine bevorzugte typische Transportkonfiguration bei der vier erfindungsgemäße Transportvorrichtungen 1a-d jeweils einen Radsatz des Schienenfahrzeuges L lagern. Die Transportvorrichtungen 1a-d weisen einen Rahmen 2 auf, der jeweils an einem vorderen und hinteren Ende in Längsrichtung der Transportvorrichtung 1a-d einen (Transportvorrichtungs-)Radsatz 4a, 4b aufweist. Die Radsätze 4a, 4b weisen Räder RT auf, die u.a. in Figur 2 gezeigt sind, und die dazu geeignet sind, auf Eisenbahnschienen aufzustehen. Dazu weisen die Räder RT u.a. einen Spurkranz SK auf, der ebenfalls in Figur 2 dargestellt ist.

Die erfindungsgemäßen Transportvorrichtungen 1a-d weisen u.a. aufgrund der nachfolgenden Merkmale den Vorteil auf, dass bei dem Transport einer in Figur 1 gezeigten Lok L die Räder RL der Drehgestelle z.B. bei einer Kurvenfahrt Bewegungsspiel auf den Transportvorrichtungen 1a-d in der Längsrichtung aufweisen, so dass ein kleiner Anlaufwinkel der Transportvorrichtungen 1a-d erzielt werden kann und dadurch die Entgleisungssicherheit auch u.a. bei schnellerer Reisegeschwindigkeit gewährleistet bleibt, obwohl der Achsabstand insbesondere zwischen der vorderen Achse der vorderen Transportvorrichtung 1a und der hinteren Achse der hinteren Transportvorrichtung 1b in Figur 1 deutlich größer ist als der Achsabstand zwischen den beiden im Drehgestell miteinander gekoppelten Radsätze der Lok L.

Figur 2 zeigt eine isometrische Ansicht einer Transportvorrichtung 1a-d, hier beispielhaft der Transportvorrichtung 1a. Diese weist zwei Längsträgerelemente 3a, 3b auf, die in Querrichtung bzw. seitlich zueinander beabstandet und parallel angeordnet sind. In Längsrichtung sind beide Längsträgerelemente 3a, 3b kongruent angeordnet. Das in Figur 2 gezeigte (hintere) erste Längsträgerelement 3a weist zwischen den beiden Lagerpunkten für die Achsen 4aa, 4ba der Radsätze 4a, 4b in einem bevorzugt mittleren Abschnitt eine Aussparung 5a auf. Diese Aussparung 5a umfasst zwei Radien oder besonders bevorzugt viertelkreisförmige Radien 6a, 6b auf. In Längsrichtung ist zwischen den beiden Radien 6a, 6b ein gerader Abschnitt bzw. ein horizontal angeordneter Abschnitt 7 angeordnet, der eine vorbestimmte Länge aufweist. Bevorzugt ist diese Länge mehrere Zentimeter oder zumindest mehrere Millimeter lang. Die Aussparung 5a ist (bevorzugt durchgehend gleich) breit gemäß der gezeigten Breite B, wobei diese bevorzugt mehrere Zentimeter umfasst. Die Breite B wird noch ausführlicher in nachfolgenden Abschnitten dieser Beschreibung thematisiert werden.

In einem Innenseitenbereich 3aa des Längsträgerelementes 3a ist im Wesentlichen in Überdeckung mit der Längsposition der Aussparung 5a eine Sichel 9 angeordnet, deren Querschnitt derart angepasst ist, dass je nach Breite der Sichel 9 eine Breite B der Aussparung 5a verändert werden kann. Mit anderen Worten kann je nach Spurweite des zu transportierenden Schienenfahrzeuges L die Breite B der Aussparung 5a auf die Spurweite angepasst werden. Im Hinblick auf Symmetrieerfordernisse wird die Breite der Sichel 9 dabei so gewählt werden, dass diese einer halben Spurweitendifferent entspricht.

Weiterhin zeigt die Figur 2, dass ein Querträgerelement 10 an einer in Längsrichtung mittigen Position des Längsträgerelementes 3a angeordnet und bevorzugt angeschweißt ist. Das Querträgerelement weist jeweils an seinen beiden Längsenden seitlich schräg abgehende Stützstreben 10a auf, die dazu beitragen, die mechanische Festigkeit des Rahmens 2 zu erhöhen.

Seitlich versetzt ist unter Berücksichtigung der maximalen vorbestimmten Spurweite der Transportvorrichtung 1a-d das zweite (in Figur 2 vordere) Längsträgerelement 3b angeordnet. Dieses weist ebenfalls zwei Lagerpunkte für die Radsätze 4a, 4b auf, wobei bei dem zweiten Längsträgerelement 3b die Lagerung der Radsatzlagergehäuse 14 besser zu erkennen ist. So ist fest verbunden mit einer Außenseite 3bb des Längsträgerelementes 3b jeweils an Längsendabschnitten 3bd ein horizontaler Kragen 12 angeordnet, der bevorzugt per Schweißverbindung befestigt ist. Unterhalb des Kragens 12 sind zwei vertikale Schienen 13a, 13b ebenfalls fest und bevorzugt mittels Schweißverbindung mit den Längsendabschnitten 3bd verbunden. Diese drei vorgenannten Komponenten bilden ein nach unten (wobei unten hier in Richtung der Gleise bedeuten soll) offenes Rechteck, in dem das Radsatzlagergehäuse 14 aufgenommen ist.

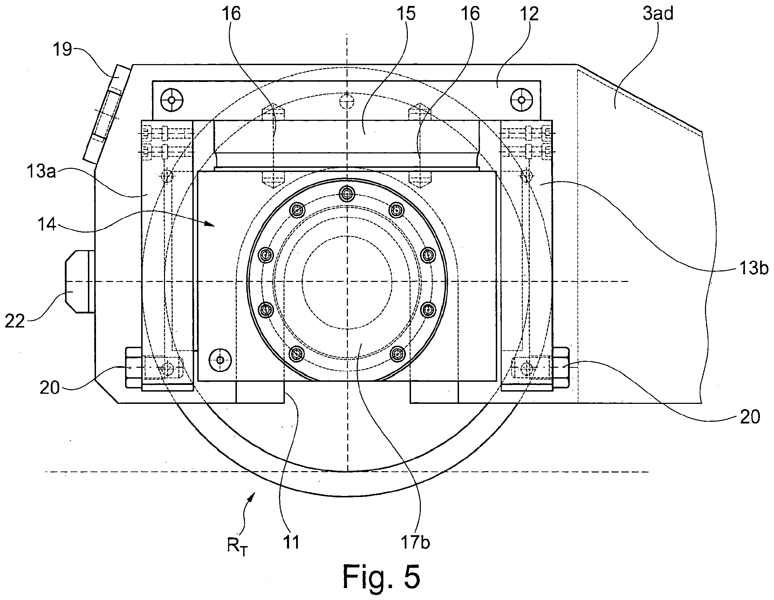

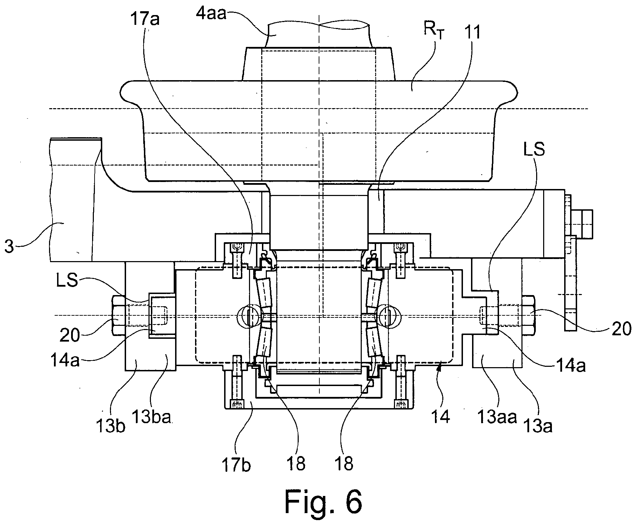

Die genaue Anordnung des Radsatzlagergehäuses 14 zeigen noch detaillierter die Figuren 5 und 6. So zeigt Figur 5 einen Teilabschnitt eines Längsendabschnittes 3bd, wobei ersichtlich wird, das eine U-förmige Ausnehmung 11, die nach unten geöffnet ist, in dem Längsträgerelement 3a, 3b vorgesehen ist, die den gleichen oder einen größeren Durchmesser hat, wie die in der Ausnehmung 11 aufzunehmende Achse 4aa, 4ba der Radsätze 4a, 4b. Die Anordnung der Achse, hier 4aa, in der Ausnehmung 11 zeigt in der geschnittenen Draufsicht zudem auch die Figur 6. Wie Figur 5 weiterhin im Detail zeigt, ist zwischen dem Radsatzlagergehäuse 14 und dem Kragen 12 ein rechteckiges Federelement 15 angeordnet. Dieses Federelement 15 muss nicht rechteckig sein. Das Federelement 15 kann aus einem Elastomer gefertigt sein und/oder Federn umfassen. Federn können auch winklig, z.B. unter einem Winkel von 45° angeordnet werden. Das Federelement 15 wird, wie Figur 5 zeigt, auf zwei Stiften 16 aufgesteckt und geführt. Unterhalb des Federelementes 15 ist das Radsatzlagergehäuse 14 angeordnet, das aufgrund der Gewichtskraft der Transportvorrichtung 1a-d gegen das Federelement 15 gedrückt wird. Das Federelement 15 erlaubt eine bevorzugt vertikale Relativbewegung des Radsatzlagergehäuses 14 bzw. des Radsatzes 4a, 4b gegenüber dem Rahmen 2, so dass z.B. Stöße oder dgl. elastisch abgefangen werden können.

Figur 6 zeigt darüber hinaus, dass Vorstehungen 14a jeweils von den kurzen Enden des Radsatzlagergehäuses 14 abstehen und in Führungsabschnitte 13aa, 13ba der vertikalen Führungsschienen 13a, 13b hineinragen, so dass das Radsatzlagergehäuse 14 in Quer- und Längsrichtung in seiner Bewegungsfreiheit eingeschränkt ist. Allerdings kann die Passung zwischen den Führungsabschnitten 13aa, 13ba und den Vorstehungen 14a bevorzugt so gewählt sein, dass ein Luftspalt LS in Quer- und/oder Längsrichtung ausgebildet ist, der eine über die Größe des Luftspaltes LS vordefiniertes Bewegungsspiel zulässt. Dieses Spiel kann bevorzugt dazu beitragen, dass bei einer Kurvenfahrt eine Anpassung der Abmessungen der Transportvorrichtung 1a-d, z.B. im Hinblick auf den Achsabstand zwischen den Radsätzen 4a und 4b, ermöglicht wird und somit die Entgleisungssicherheit noch weiter gesteigert werden kann.

Zudem zeigt die Figur 6 auch die Quereinspannung von Lagern 18 der Radsatzlager, die mittels eines Ringes 17a und eines Abschlussdeckels 17b, die mit Schrauben fixiert sind, eingespannt und mit vorbestimmter Vorspannung in Position gehalten werden. Damit die Radsatzlagergehäuse 14 bei einem Anheben der Transportvorrichtung 1a-d, was z.B. mittels eines Kranes, der an den gezeigten Kranösen 19 befestigt werden kann, nicht aus den Ausnehmungen herausfallen können, können bevorzugt Blockierelemente, wie. z.B. nicht gezeigte Klötze, mit den vertikalen Schienen 13a, 13b unterhalb des montierten Radsatzlagergehäuses 14 mittels Sicherungsschrauben 20 lösbar befestigt werden.

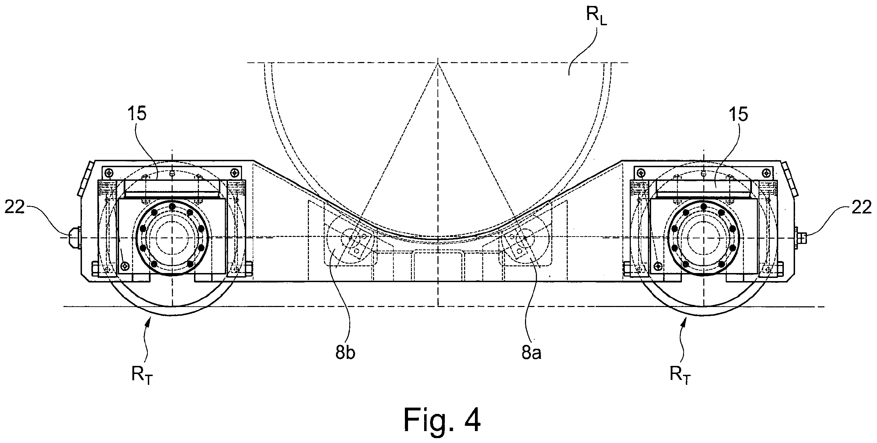

Oben wurde nun die Lagerung der Radsätze 4a, 4b an dem Rahmen 2 erläutert, die in den Figuren 2 und 5 bis 6 dargestellt ist. Nachfolgend soll nun die zweite Aussparung 5b, des zweiten Längsträgerelementes 3b näher beschrieben werden. So weist diese Aussparung 5b bevorzugt keinen geraden Abschnitt 7 auf, sondern ist im Wesentlichen gekrümmt oder bogenförmig ausgeprägt. In Richtung der Innenseite 3ba des Längsträgerelementes 3b sind innerhalb eines Längsabschnittes, in dem auch die Aussparung 5b angeordnet ist, zwei Radaufnahmeelemente 8a, 8b drehbar gelagert. Diese Radaufnahmeelemente 8a, 8b sind teilweise in einer Versenkung 21 zwischen zwei Längsabschnitten α, β des Längsträgerelementes 3b versenkt, so dass nur ein Teilabschnitt der Radaufnahmeelemente 8a, 8b, die bevorzugt Rollen sind, aus der Versenkung 21 herausragt. Die Radaufnahmeelemente 8a, 8b sind innerhalb der Versenkung 21 auf einer Drehachse, die in Figur 4 sichtbar ist, drehbar gelagert und werden in der Querrichtung von einer oder mehreren nicht gezeigten Hülsen lateral positionsfixiert. Die Hülse(n) weist bzw. weisen eine vorbestimmte Länge auf, die so angepasst ist/sind, dass die Radaufnahmeelemente 8a, 8b in Querrichtung so zum Rahmen 2 angeordnet sind, dass auf den beiden Radaufnahmeelemente 8a, 8b ein Rad RL eines Radsatzes des Schienenfahrzeuges L aufstehen kann, wie dies mittels gestrichelter Linien in Fig. 4 dargestellt ist. Ein Spurkranz des Rades RL liegt dann innerhalb (zum Rahmen 2) der Radaufnahmeelemente 8a, 8b.

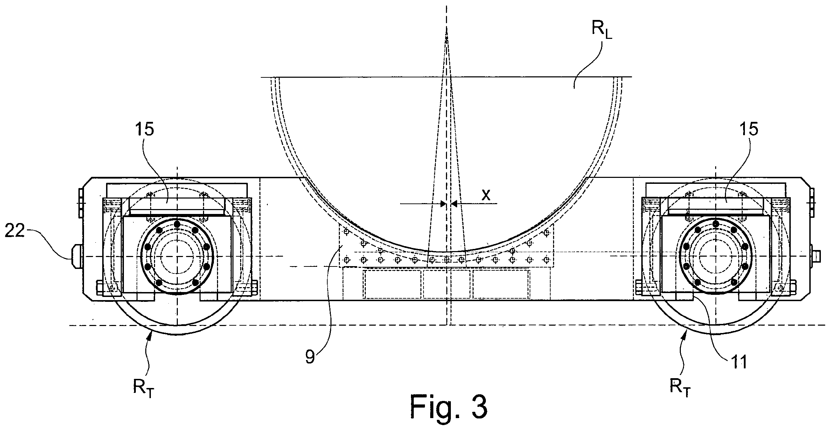

Die Bedeutung der Positionierung der Radaufnahmeelemente 8a, 8b in Querrichtung mittels der Hülse oder den Hülsen liegt darin, dass in Abhängigkeit zu der Breite B der ersten Aussparung 5a ein Anpassung auf die Spurweite des zu transportierenden Schienenfahrzeuges L ermöglicht wird. Wird beispielsweise rechts und links der Radaufnahmeelemente 8a, 8b eine Hülse angeordnet, die sich gegen die Längsabschnitte α, β abstützen, so ist ein Abstand zwischen einem Mittelpunkt in Querrichtung des Rahmens und den Auflagepunkten der Radaufnahmeelemente 8a, 8b vordefiniert und es muss anschließend nur noch die Breite B der ersten Aussparung 5a mittels Montierten einer entsprechend breiten Sichel 9 (oder mittels kompletten Weglassens der Sichel 9) angepasst werden. Die Breite B der ersten Aussparung 5a sollte dabei so gewählt werden, dass der Abstand zum Mittelpunkt in Querrichtung des Rahmens 2 identisch zu dem Abstand zwischen Mittelpunkt und Radaufnahmeelementen 8a, 8b ist und dass dieser der halben Spurweite entspricht. Der Spurkranz des Rades RL liegt dabei bzgl. der ersten Aussparung 5a innerhalb der Innenkante der ersten Aussparung 5a bzw. der Sichel 9. Figur 3 zeigt schematisch die Anordnung bzw. Lagerung eines Rades RL in der ersten Aussparung 5a.

Der technische Vorteil, der mit der Ausgestaltung der oben beschriebenen Aussparungen 5a, 5b erreicht werden kann, ist, dass die aufzunehmenden Räder RL des Radsatzes eines Schienenfahrzeuges L in Längsrichtung insbesondere um die Länge des geraden Abschnittes 7 auf einer Querseite des Rahmens 2 nahezu kraftfrei verfahren werden können, z.B. wenn die Transportvorrichtung 1a oder besonders bevorzugt mehrere hintereinander angeordnete Transportvorrichtungen 1a-d (s. z.B. Figur 1) in eine Kurve der Eisenbahnschienen einfahren oder eine solche durchfahren. Gleichzeitig erlaubt die gegenüberliegende Aussparung, die die Radaufnahmeelementen 8a, 8b aufweist, dass das darauf aufgestellte Rad RL des Schienenfahrzeuges L frei rotieren kann. Mit anderen Worten erlaubt die erste Aussparung 5a mit dem geraden Abschnitt 7 eine Längsverschiebung des Rades RL bzw. eine Relativbewegung des Rades RL zu dem Rahmen 2 in Längsrichtung, während zudem das andere Rad RL des Radsatzes in der zweiten Aussparung 5b aufgrund der Radaufnahmeelementen 8a, 8b drehend gelagert ist und seine Rotationsposition entsprechend nachführen bzw. anpassen kann. Das Ergebnis davon ist, dass besonders im Verbund von zwei Transportvorrichtungen 1a-d, die zwei Radsätze eines Drehgestells lagern, eine vorteilhafte Reduktion des Anlaufwinkels ermöglicht werden kann, der eine Sicherstellung der Entgleisungssicherheit ermöglicht; sogar bei größeren Reisegeschwindigkeiten bis z. B. 60 - 100 km/h.

Weiterhin zeigt die Figur 2, wie ebenfalls angemerkt werden soll, dass die Sichel 9 bevorzugt mit einer Vielzahl Schrauben an der Innenseite 3aa des ersten Längsträgerelementes 3a lösbar befestigt werden kann. Weiterhin sei der Vollständigkeit halber erwähnt, dass der Aufbau bezüglich der Kragen 12 und der vertikalen Schienen 13a, 13b auf der Seite des ersten Längsträgerelementes 3a (auf dessen Außenseite 3ab) bevorzugt identisch zu dem vorbeschriebenen Aufbau an dem zweiten Längsträgerelement 3b ist. An einem oder allen Längsendabschnitten der beiden Längsträgerelemente 3a, 3b können zudem elastische Stopperlelemente 22 angeordnet sein, die eine Beschädigung beim Aufeinanderstoßen zweier Transportvorrichtungen 1a-d verhindern.

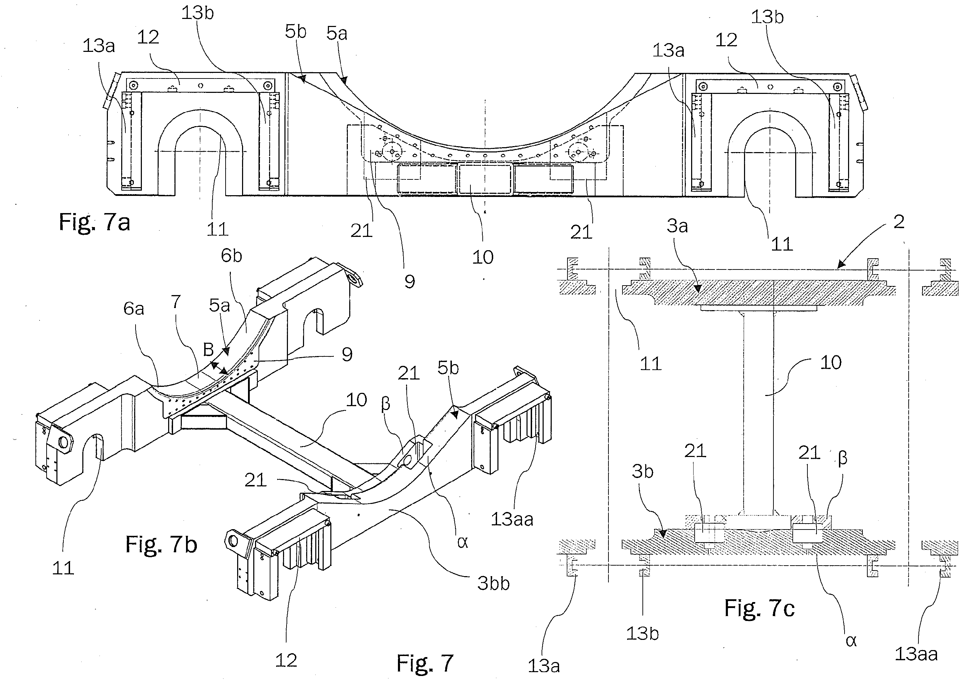

Ferner zeigen die Figuren 7a-c Ansichten des Rahmens 2 ohne Radsätze 4a, 4b. So zeigt Figur 7a eine Seitenansicht des Rahmens 2, wobei die Konturen verdeckter Komponenten mit gestrichelten Linien sichtbar gemacht sind. Aus dieser Seitenansicht ergibt sich unter anderem die Positionierung der beiden Aussparungen 5a, 5b in Längsrichtung zueinander und deren unterschiedliche Formgebung im Hinblick auf die nach oben ausgerichtete Oberflächen. Weiterhin sind aus dieser Ansicht auch die Ausnehmungen 11, in die die Radsätze 4a, 4b bzw. deren Achsen einsetzbar sind ersichtlich, sowie die darum herum angeordneten Schienen 13a, 13b und der Kragen 12. Die Figur 7b zeigt im Wesentlichen die gleiche Ansicht wie die Figur 2, wobei die Radsätze 4a, 4b nicht montiert sind, so dass insbesondere die Details im Bereich der Ausnehmungen 11 besser erkennbar sind. Auch werden die Versenkungen 21 ohne Radaufnahmeelemente 8a, 8b gezeigt, so dass auch in einer der beiden Versenkungen 21 die Bohrung zur Aufnahme der Achse der Radaufnahmeelemente 8a, 8b an einer Innenwandseite der Versenkung sichtbar wird.

Schließlich zeigt die Figur 7c eine Draufsicht auf einen Schnitt quer durch den Rahmen 2, der die Formgebung der Längsträgerelemente 3a, 3b besonders gut wiedergibt und zeigt, dass die weiteren Komponenten, wie die Schienen 13a, 13b oder der Längsabschnitt β fest bspw. mittels Schweißverbindung an dem Grundbauelement des Längsträgerelementes 3a, 3b befestigt ist.

Zusammenfassend ist festzuhalten, dass die Transportvorrichtung 1a-d eine erhöhte Flexibilität beim Transport von Schienenfahrzeugen 1 auf Eisenbahnschienen ermöglicht, da sowohl eine erhöhte Reisegeschwindigkeit bei Gewährleistung der Entgleisungssicherheit ermöglicht wird und darüber hinaus auch Schienenfahrzeugen 1 mit unterschiedliche Spurweiten transportiert werden können.

Weiterhin soll festgehalten werden, dass ein erfindungsgemäßes Transportsystem bevorzugt für jeden Radsatz eines zu transportierenden Schienenfahrzeuges eine oben beschriebene Transportvorrichtung 1a-d aufweist, so dass das Transportsystem gemäß Figur 1 bspw. vier Transportvorrichtungen 1a-d umfasst.

### Referenzzeichen

1a-d Transportvorrichtung
2 Rahmen(element)
3a, 3b Längsträgerelement
3aa, 3ab Innenseite Längsträgerelement
3ab, 3bb Außenseite Längsträgerelement
3ac, 3bc Oberseite Längsträgerelement
3ad, 3bd Längsendenabschnitt(e) Längsträgerelement
4a, 4b Radsatz der Transportvorrichtung
4aa, 4ba Achsen der Radsätze 4a, 4b
5a, 5b Aussparung bzw. Mulde
6a, 6b Radien der Aussparung
7 gerade/horizontaler Abschnitt
8a, 8b Radaufnahmeelemente
9 Sichel
10 Querträgerelement
10a Streben
11 Ausnehmung in Längsträgerelement
12 Kragen
13a, 13b vertikale Schienen
13aa, 13ba Führungsabschnitte
14 Radsatzlagergehäuse
14a Vorstehungen
15 Federelement
16 Stifte
17a, 17b Ring, Deckel
18 Lager der Radsätze 4a, 4b
19 (Kran-)Ösen
20 Sicherungsschraube
21 Versenkung
22 elastisches Stopperelement
RT Rad Transportvorrichtung 1a-d
RL Rad Schienenfahrzeug/Lok
L Schienenfahrzeug/Lok
B Breite der Aussparung 5a
LS Luftspalt
Spurkranz SK
α,β Längsabschnitte des zweiten Längsträgerelementes 3b

## Patentansprüche

1. Transportvorrichtung (1a-d) zur Aufnahme eines Radsatzes (RL) eines Schienenfahrzeuges (L) für den Transport von Schienenfahrzeugen (L) auf Eisenbahnschienen, mit
- einem Rahmenelement (2), das zumindest zwei Längsträgerelemente (3a, 3b) aufweist, die in Querrichtung zueinander beabstandet angeordnet sind, und
- zumindest zwei Radsätzen (4a, 4b), die an den Längsträgerelementen (3a, 3b) in Längsrichtung zueinander beabstandet angeordnet sind, wobei
- die Längsträgerelemente (3a, 3b) zwischen den zumindest zwei Radsätzen (4a, 4b) jeweils eine Aussparung (5a, 5b) zum Aufnehmen eines Rades (RL) des zu transportierenden Schienenfahrzeuges (L) aufweisen,
wobei an einem der beiden Längsträgerelemente (3a, 3b) zwei Radaufnahmeelemente (8a, 8b) an dem Längsträgerelement (3b) rotierbar und in innerhalb einer der Aussparungen (5a, 5b) beabstandet zueinander gelagert sind.

2. Transportvorrichtung (1a-d) gemäß Patentanspruch 1, **gekennzeichnet dadurch, dass** eine erste Aussparung (5a) eines ersten Längsträgerelementes (3a) zwei Radien (6a, 6b) aufweist, wobei zwischen den beiden Radien (6a, 6b) ein horizontaler/gerade Abschnitt (7) angeordnet ist.

3. Transportvorrichtung (1a-d) gemäß zumindest einem der voranstehenden Patentansprüche, **gekennzeichnet dadurch, dass** eine zweite Aussparung (5b) eines zweiten Längsträgerelementes (3b) zumindest einen gekrümmten Abschnitt aufweist.

4. Transportvorrichtung (1a-d) gemäß zumindest einem der voranstehenden Patentansprüche, **gekennzeichnet dadurch, dass** eine Breite (B) der ersten Aussparung (5a) mittels einer an der Innenseite (3aa) der ersten Aussparung (5a) montierbaren Sichel (9) veränderbar ist.

5. Transportvorrichtung (1a-d) gemäß zumindest einem der voranstehenden Patentansprüche, **gekennzeichnet dadurch, dass** der Rahmen (2) zumindest ein Querträgerelement (10) aufweist, das senkrecht zu und zwischen den Längsträgerelementen (3a, 3b) montiert ist.

6. Transportvorrichtung (1a-d) gemäß zumindest einem der voranstehenden Patentansprüche, **gekennzeichnet dadurch, dass** der Rahmen (2) in der Draufsicht eine H-Form aufweist.

7. Transportvorrichtung (1a-d) gemäß zumindest einem der voranstehenden Patentansprüche, **gekennzeichnet dadurch, dass** die Längsträgerelemente (3a, 3b) jeweils an ihren Längsendabschnitten (3ad, 3bd) eine U-förmige Ausnehmung (11) aufweisen, die nach unten offen ist und dazu geeignet sind, eine Achse eines Radsatzes (4a, 4b) der Transportvorrichtung (1a-d) aufzunehmen.

8. Transportvorrichtung (1a-d) gemäß zumindest einem der voranstehenden Patentansprüche, **gekennzeichnet dadurch, dass** die Räder (RT) der Radsätze (4a, 4b) der Transportvorrichtung (1a-d) jeweils auf der Innenseite (3aa, 3ba) der Längsträgerelemente (3a, 3b) angeordnet sind.

9. Transportvorrichtung (1a-d) gemäß zumindest einem der voranstehenden Patentansprüche, **gekennzeichnet dadurch, dass** jeweils an einer Außenseite (3ab, 3bb) der Längsträgerelemente (3a,3b) ein horizontaler Kragen (12) und zwei vertikale Schienen (13a, 13b) abstehen, die entlang eines nach unten geöffneten Rechteckes angeordnet sind, um dazwischen ein Lagergehäuse (14) eines Radsatzes aufnehmen zu können.

10. Transportvorrichtung (1a-d) gemäß zumindest einem der voranstehenden Patentansprüche, **gekennzeichnet dadurch, dass** zwischen dem horizontalen Kragen (12) und dem Radsatzlagergehäuse (14) ein Federelement (15) angeordnet ist.

11. Transportvorrichtung (1a-d) gemäß zumindest einem der voranstehenden Patentansprüche, **gekennzeichnet dadurch, dass** das Radlagergehäuse (14) zwei Längsenden mit einer Vorstehung (14a) aufweist, wobei
die Vorstehung (14a) in einen Führungsabschnitt (13aa, 13ba) der vertikalen Schienen (13a, 13b) eingesetzt ist, und wobei zwischen der Vorstehung (14a) und den Außenwänden des Führungsabschnittes (13aa, 13ba) ein Luftspalt (LS) vorgesehen ist.

12. Transportvorrichtung (1a-d) gemäß zumindest einem der voranstehenden Patentansprüche, **gekennzeichnet dadurch, dass** das Radaufnahmeelement (8a, 8b) auf einer Drehachse gelagert ist, die zwischen zwei Längsabschnitten (α, β) des Längsträgerelementes (3b) in einer Versenkung (21) angeordnet ist, und das Radaufnahmeelement (8a, 8b) gegen ein Verschieben in Querrichtung von zumindest einer Hülse fixiert wird.

13. Transportvorrichtung (1a-d) gemäß zumindest einem der voranstehenden Patentansprüche, **gekennzeichnet dadurch, dass** eine vorbestimmte Queranordnungsposition des Radaufnahmeelementes (8a, 8b) mittels der Länge der zumindest einen Hülse und deren Anordnung in Relation zu den Längsabschnitten (α, β) des Längsträgerelementes (3b) einstellbar ist.

14. Transportvorrichtung (1a-d) gemäß zumindest einem der voranstehenden Patentansprüche, **gekennzeichnet dadurch, dass** die Transportvorrichtung (1a-d) vier Kranösen (19) aufweist, und/oder dass die Transportvorrichtung (1a-d) zumindest ein elastisches Stopperelement (22) an jeweils einem Längsende aufweist.

## Claims

1. A transportation device (1a-d) for receiving a wheel set (RL) of a rail vehicle (L) for transport of rail vehicles (L) on railroad tracks, comprising
- a frame element (2) including at least two longitudinal support elements (3a, 3b) spaced apart from one another in the transverse direction, and
- at least two wheel sets (4a, 4b) arranged on said longitudinal support elements (3a, 3b) spaced apart from one another in the longitudinal direction, wherein
- said longitudinal support elements (3a, 3b) each have a recess (5a, 5b) between said at least two wheel sets (43, 4b) for receiving a wheel (RL) of the rail vehicle (L) to be transported, wherein
on one of the two longitudinal support elements (3a, 3b), two wheel receiving elements (8a, 8b) are rotatable on the longitudinal support element (3b) and are mounted spaced apart from one another within one of the recesses (5a, 5b).

2. The transportation device (1a-d) according to claim 1, **characterized in that** a first recess (5a) of a first longitudinal support element (3a) has two radii (6a, 6b) with a horizontal/straight section (7) being arranged between the two radii (6a, 6b).

3. The transportation device (1a-d) according to at least one of the preceding claims, **characterized in that** a second recess (5b) of a second longitudinal support element (3b) has at least one curved section.

4. The transportation device (1a-d) according to at least one of the preceding claims, **characterized in that** a width (B) of said first recess (5a) is changeable by means of a sickle (9) which can be mounted on the inner side (3aa) of said first recess (5a).

5. The transportation device (1a-d) according to at least one of the preceding claims, **characterized in that** said frame (2) has at least one cross support element (10) mounted perpendicular to and between said longitudinal support elements (3a, 3b).

6. The transportation device (1a-d) according to at least one of the preceding claims, **characterized in that** said frame (2) has an H-shape in plan view.

7. The transportation device (1a-d) according to at least one of the preceding claims, **characterized in that** said longitudinal support elements (3a, 3b) each have, at their longitudinal end sections (3ad, 3bd), a U-shaped recess (11) which is open in downward direction and is suitable to receive an axle of a wheel set (4a, 4b) of said transportation device (1a-d).

8. The transportation device (1a-d) according to at least one of the preceding claims, **characterized in that** the wheels (RT) of the wheel sets (4a, 4b) of said transportation device (1a-d) each are arranged on the inner side (3aa, 3ba) of said longitudinal support elements (3a, 3b).

9. The transportation device (1a-d) according to at least one of the preceding claims, **characterized in that**, on an outer side (3ab, 3bb) of the longitudinal support elements (3a, 3b), respectively, a horizontal collar (12) and two vertical rails (13a, 13b) protrude, which are arranged along a rectangle opened downwards in order to be able to receive a bearing housing (14) of a wheel set in between.

10. The transportation device (1a-d) according to at least one of the preceding claims, **characterized in that** a spring element (15) is arranged between said horizontal collar (12) and the wheel set bearing housing (14).

11. The transportation device (1a-d) according to at least one of the preceding claims, **characterized in that** the wheel bearing housing (14) has two longitudinal ends with a projection (14a), said projection (14a) being inserted into a guide section (13aa, 13ba) of the vertical rails (13a, 13b), and an air gap (LS) being provided between said projection (14a) and the outer walls of said guide section (13aa, 13ba).

12. The transportation device (1a-d) according to at least one of the preceding claims, **characterized in that** the wheel receiving element (8a, 8b) is mounted on an axis of rotation arranged in a recess (21) between two longitudinal sections (α, β) of the longitudinal support element (3b), and said wheel receiving element (8a, 8b) is fixed against displacement in the transverse direction by at least one sleeve.

13. The transportation device (1a-d) according to at least one of the preceding claims, **characterized in that** a predetermined transverse arrangement position of said wheel receiving element (8a, 8b) is adjustable by means of the length of the at least one sleeve and the arrangement thereof in relation to the longitudinal sections (α, β) of the longitudinal support element (3b).

14. The transportation device (1a-d) according to at least one of the preceding claims, **characterized in that** said transportation device (1a-d) has four crane eyes (19) and/or said transportation device (1a-d) has at least one elastic stop element (22) on each longitudinal end.

## Revendications

1. Dispositif de transport (1a - d) destiné à recevoir un jeu de roues (RL) d'un véhicule ferroviaire (L) pour le transport de véhicules ferroviaires (L) sur des voies ferrées, comportant
- un élément de cadre (2) qui comporte au moins deux éléments porteurs longitudinaux (3a, 3b) disposés à distance l'un de l'autre dans la direction transversale, et
- au moins deux jeux de roues (4a, 4b) qui sont disposés sur les éléments porteurs longitudinaux (3a, 3b) à distance l'un de l'autre dans la direction longitudinale,
dans lequel
- les éléments porteurs longitudinaux (3a, 3b) présentent au moins une échancrure respective (5a, 5b) entre lesdits au moins deux jeux de roues (4a, 4b), qui est destinée à recevoir une roue (RL) du véhicule ferroviaire à transporter,
- sur l'un des deux éléments porteurs longitudinaux (3a, 3b), deux éléments de réception de roue (8a, 8b) sont montés sur l'élément porteur longitudinal (3b) de manière à pouvoir tourner et à être espacés l'un de l'autre au sein de l'une des échancrures (5a, 5b).

2. Dispositif de transport (1a - d) selon la revendication 1,
**caractérisé en ce que**
une première échancrure (5a) d'un premier élément porteur longitudinal (3a) présente deux rayons, une portion horizontale/droite (7) étant disposée entre les deux rayons (6a, 6b).

3. Dispositif de transport (1a - d) selon l'une au moins des revendications précédentes,
**caractérisé en ce que**
une seconde échancrure (5b) d'un second élément porteur longitudinal (3b) présente au moins une portion incurvée.

4. Dispositif de transport (1a - d) selon l'une au moins des revendications précédentes,
**caractérisé en ce que**
une largeur (B) de la première échancrure (5a) peut être modifiée au moyen d'une faucille (9) qui peut être montée sur le côté intérieur (3aa) de la première échancrure (5a).

5. Dispositif de transport (1a - d) selon l'une au moins des revendications précédentes,
**caractérisé en ce que**
le cadre (2) comporte au moins un élément porteur transversal (10) monté perpendiculairement aux éléments porteurs longitudinaux (3a, 3b) et entre ceux-ci.

6. Dispositif de transport (1a - d) selon l'une au moins des revendications précédentes,
**caractérisé en ce que**
le cadre (2) présente une forme en H en vue de dessus.

7. Dispositif de transport (1a - d) selon l'une au moins des revendications précédentes,
**caractérisé en ce que**
les éléments porteurs longitudinaux (3a, 3b) présentent chacun un évidement en forme de U (11) à leurs portions d'extrémité longitudinales (3ad, 3bd), qui est ouvert vers le bas et qui est apte à recevoir un essieu d'un jeu de roues (4a, 4b) du dispositif de transport (1a - d).

8. Dispositif de transport (1a - d) selon l'une au moins des revendications précédentes,
**caractérisé en ce que**
les roues (RT) des jeux de roues (4a, 4b) du dispositif de transport (1a - d) sont chacune disposées sur le côté intérieur (3aa, 3ba) des éléments porteurs longitudinaux (3a, 3b).

9. Dispositif de transport (1a - d) selon l'une au moins des revendications précédentes,
**caractérisé en ce que**
un collier horizontal (12) et deux rails verticaux (13a, 13b) font chacun saillie sur un côté extérieur (3ab, 3bb) des éléments porteurs longitudinaux (3a, 3b), qui sont disposés le long d'un rectangle ouvert vers le bas, afin de pouvoir recevoir entre eux un boîtier de palier (14) d'un jeu de roues.

10. Dispositif de transport (1a - d) selon l'une au moins des revendications précédentes,
**caractérisé en ce que**
un élément formant ressort (15) est disposé entre le collier horizontal (12) et le boîtier de palier (14) du jeu de roues.

11. Dispositif de transport (1a - d) selon l'une au moins des revendications précédentes,
**caractérisé en ce que**
le boîtier de palier de roue (14) présente deux extrémités longitudinales pourvues d'une saillie (14a), la saillie (14a) étant insérée dans une portion de guidage (13aa, 13ba) des rails verticaux (13a, 13b), et un espace d'air (LS) étant prévu entre la saillie (14a) et les parois extérieures de la portion de guidage (13aa, 13ba).

12. Dispositif de transport (1a - d) selon l'une au moins des revendications précédentes,
**caractérisé en ce que**
l'élément de réception de roue (8a, 8b) est monté sur un axe de rotation qui est disposé entre deux portions longitudinales (α, β) de l'élément porteur longitudinal (3b) dans un creux (21), et l'élément de réception de roue (8a, 8b) est fixé à l'encontre d'un déplacement dans la direction transversale par au moins un manchon.

13. Dispositif de transport (1a - d) selon l'une au moins des revendications précédentes,
**caractérisé en ce que**
une position de montage transversale prédéterminée de l'élément de réception de roue (8a, 8b) est réglable au moyen de la longueur dudit au moins un manchon et de sa disposition par rapport aux portions longitudinales (α, β) de l'élément porteur longitudinal (3b).

14. Dispositif de transport (1a - d) selon l'une au moins des revendications précédentes,
**caractérisé en ce que**
le dispositif de transport (1a - d) comporte quatre œillets de levage (19), et/ou **en ce que**
le dispositif de transport (1a - d) comporte au moins un élément d'arrêt élastique (22) à une extrémité longitudinale respective.
